# EUROPEAN PATENT SPECIFICATION

(11) **EP 3 725 425 B1**
(45) Date of publication and mention of the grant of the patent: **13.03.2024**
(21) Application number: 20169679.6
(22) Date of filing: 15.04.2020
(51) Int. Cl.: B07B 1/00, B07B 13/16, B02C 21/02, B02C 23/02

(54) **MATERIAL PROCESSING APPARATUS WITH MOVABLE MATERIAL HANDLING UNIT**
MATERIALBEARBEITUNGSVORRICHTUNG MIT BEWEGLICHER MATERIALHANDHABUNGSEINHEIT
APPAREIL DE TRAITEMENT DE MATÉRIAUX DOTÉ D'UNE UNITÉ DE MANIPULATION DE MATÉRIAUX MOBILE

(30) Priority: 17.04.2019 GB 201905486
(43) Date of publication of application: 21.10.2020
(73) Proprietor: Terex GB Limited, Dungannon County Tyrone BT71 4DR (GB)
(72) Inventor: MAWHINNEY, Mark, Dungannon, Tyrone BT71 4DU (GB); AIKEN, Steven, Dungannon, Tyrone BT71 4DR (GB)
(74) Representative: FRKelly

(56) References cited:
- EP-A1- 0 301 798
- CN-U- 203 682 482
- DE-A1- 3 228 735
- DE-C1- 3 800 816
- GB-A- 2 301 051
- US-A1- 2008 314 802

## Description

### Field of the Invention

The invention relates to material processing apparatus.

### Background to the Invention

Mobile material processing apparatus for performing processes such as screening, separating, crushing or recycling are well known and usually include conveyors by which processed material can be discharged from the apparatus. It is also known to fold the conveyors to facilitate transport of the apparatus. Often, even when the conveyors are folded the apparatus is too wide to be transported as regular traffic, and special transport arrangements are required. The extent of the special transport requirements can depend on the width of the apparatus and so it is desirable to minimize the width where possible. Another problem is that the configuration of the material processing apparatus may not be sufficiently adaptable to accommodate the full range of operation of its material processing units. United Kingdom patent GB 2301051 A discloses a material processing apparatus comprising a chassis having a longitudinal axis, a material processing unit carried by the chassis and a material handling unit for receiving processed material from the material processing unit. The material handling unit comprises a conveyor and is movable with respect to the material processing unit.

It would be desirable to provide a material processing apparatus that mitigates the problems outlined above.

### Summary of the Invention

The invention provides a material processing apparatus as claimed in claim 1.

In accordance with the invention, said material handling unit comprises at least one conveyor. In a deployed state, said at least one conveyor may project from said apparatus in a direction that is perpendicular or oblique to said longitudinal axis. Said at least one conveyor is typically foldable from said deployed state to a transport state. Preferably, in said transport state said at least one conveyor does not project beyond said material processing unit in a lateral direction perpendicular to said longitudinal axis.

In preferred embodiments, said at least one conveyor comprises a first conveyor and a second conveyor, and wherein, optionally, said first conveyor is arranged for projection from a first side of the apparatus with respect to said longitudinal axis, and said second conveyor is arranged for projection from a second side of the apparatus opposite said first side with respect to said longitudinal axis.

Preferably, said material handling unit is movable in said longitudinal direction into and out of a first state in which said at least one conveyor does not overlap with said material processing unit in said longitudinal direction. In preferred embodiments, said at least one conveyor comprises more than one conveyor, and when said material handling unit is in said first state none of the conveyors overlap with said material processing unit in said longitudinal direction. Typically, said material handling unit is movable in said longitudinal direction into and out of a second state in which at least one of said at least one conveyor at least partly overlaps with said material processing unit in said longitudinal direction.

Typically, said material processing unit has a discharge end, said material handling unit being movable with respect to said material processing unit to adjust a relative longitudinal position between said at least one conveyor and said discharge end. In said second state, at least one of said at least one conveyor may at least partly overlaps with said discharge end in said longitudinal direction.

In preferred embodiments, the material handling unit is movable longitudinally with respect to an outlet of the material processing unit to allows a relative longitudinal position between said outlet and at least one inlet of the material handling unit to be varied. Preferably, the material handling unit is movable to adjust a relative longitudinal position between said outlet and said at least one conveyor, in particular a feed section of said at least one conveyor. Said outlet may comprise a discharge end of a conveyor.

In preferred embodiments, in a material processing mode, said material handling unit is positioned with respect to said material processing unit such that material discharged in use from said discharge end is deposited directly or indirectly onto said at least one conveyor.

According to the invention, said material processing unit has an outlet and said material handling unit comprises a separation unit for receiving material from said outlet, and wherein said material handling unit is movable with respect to said material processing unit to adjust a relative longitudinal position between separation unit and said discharge end. The separation unit typically comprises at least one inlet for receiving material from said material processing unit, wherein said material handling unit is movable with respect to said material processing unit to adjust a relative longitudinal position between said at least one inlet and said outlet. Said separation unit may be configured to separate material received from said material processing unit, and to direct separated material onto said at least one conveyor. The separation unit typically comprises a body structure configured to define at least two channels, each channel having a respective inlet for receiving material from the material processing unit, the inlets preferably being spaced apart in the longitudinal direction.

In preferred embodiments, said material handling unit is provided on a carriage, said carriage being coupled to said chassis for movement in said longitudinal direction.

In preferred embodiments, the material processing unit includes a conveyor arranged to convey material in said longitudinal direction, said conveyor having a discharge end, said material handling unit being positioned, in a material processing mode, to receive material from said discharge end of the conveyor. In said second state, at least one of said at least one conveyor may at least partly overlaps with said discharge end in said longitudinal direction. The material processing unit conveyor may be of a type that is operable at any one of multiple speeds.

In some embodiments, said material processing unit comprises an eddy current separator.

In preferred embodiments, the overall width of the apparatus is reduced in comparison with comparable conventional apparatus, which is advantageous as it can simplify any required transport arrangements, for example with regard to required permits and notice period prior to transport.

In preferred embodiments, the adaptability of the apparatus is improved to accommodate a wider range of operation of its material processing units than is conventionally achieved.

Further advantageous aspects of the invention will be apparent to those ordinarily skilled in the art upon review of the following description of a specific embodiment and with reference to the accompanying drawings.

### Brief Description of the Drawings

Embodiments of the invention are now described by way of example and with reference to the accompanying drawings in which like numerals are used to denote like parts and in which:
Figure 1 is a side view of a material processing apparatus embodying the invention;
Figure 2 is a side view of a material handling unit being part of the material processing apparatus of Figure 1;
Figure 3 is a side view of part of the material processing apparatus of Figure 1, showing the material handling unit of Figure 2 and part of a material processing unit;
Figure 4 is a schematic side view of the material handling unit and material processing unit being part of a material processing apparatus embodying the invention;
Figure 5A is a schematic side view of the material handling unit and a material processing unit in a first configuration in which they overlap in a longitudinal direction and in which a conveyor is shown in a deployed state;
Figure 5B is a schematic end view of the configuration of Figure 5A;
Figure 5C is a schematic side view of the material handling unit and a material processing unit in a second configuration in which they overlap in the longitudinal direction and in which the conveyor is shown in a deployed state;
Figure 5D is a schematic end view of the configuration of Figure 5C;
Figure 5E is a schematic side view of the material handling unit and a material processing unit in a third configuration in which they overlap in the longitudinal direction and in which the conveyor is shown in a deployed state;
Figure 5F is a schematic end view of the configuration of Figure 5E;
Figure 5G is a schematic side view of the material handling unit and a material processing unit in a fourth configuration in which they do not overlap in the longitudinal direction and in which the conveyor is shown in a transport state;
Figure 5H is a schematic end view of the configuration of Figure 5G;
Figure 6A is a schematic end view of the material handling unit and material processing unit, wherein one type of conveyor is shown in a folded state; and
Figure 6B is a schematic end view of the material handling unit and material processing unit, wherein an alternative first type of conveyor is shown in a folded state.

### Detailed Description of the Drawings

Referring now to the drawings, there is shown, generally indicated as 10, a material processing apparatus. Only those parts of the apparatus that are helpful for understanding the present invention are shown. In general, the apparatus 10 may be configured to perform any one or more of a plurality of processes, such as feeding, screening, separating, crushing, recycling, demolition and/or washing, on one or more types of aggregate or other material, for example rocks, stones, gravel, sand and/or soil, or any other material, especially but not exclusively, material that is quarried, mined, excavated or requires recycling. To this end, the apparatus may include one or more material processing unit 12 configured to perform one or more of the foregoing processes. In typical embodiments of the invention, and as is illustrated, the material processing unit 12 comprises an eddy current separator. It will be understood that the invention is not limited to eddy current separators and may be employed with other types of material processing unit, especially those that comprise a longitudinally disposed conveyor that discharges processed material from a discharge end. For example, the material processing unit may comprise a sensor based material sorting unit, e.g. of the type that use optical sensors or x-ray sensors, both of which use a using an air ejection method, or any other machine that has a transfer point between two conveyors.

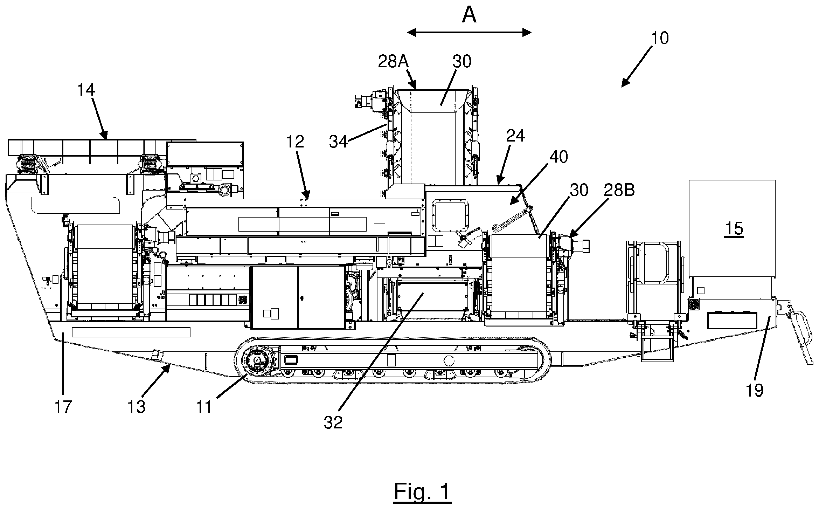

The apparatus 10 includes chassis 13 that carries the material processing unit 12. The chassis 13 may also carry one or more other components that facilitate use of the processing unit 12, usually including a feed unit 14 for delivering material to the material processing unit 12. The feed unit 14 may take any conventional form, typically comprising a hopper and optionally a feed conveyor and/or a screen. The chassis 13 has a longitudinal axis extending from end 17 to end 19, which may also be said to correspond to the front-to-rear direction of the chassis 13, and of the apparatus 10. The material processing unit 12 is arranged to process material in a forward direction (left to right as viewed in Figure 1) that is parallel with the longitudinal axis of the chassis 13, and to this end may be oriented on the chassis 13 such that its material outlet is located forwardly of its material inlet. The feed unit 14 is typically located rearwardly of the material processing unit 12 so that it may feed material to the inlet of the unit 12.

The powered components of the apparatus 10, including the material processing unit 12, are typically powered by one or more hydraulic system comprising motor(s), actuator(s) and/or other component as required. It will be understood that alternative power systems, e.g. electrical or pneumatic systems, may be used, and so the motor(s) and other components may be powered by alternative means. An electrical system may also be provided as would be apparent to a skilled person. In any event the apparatus 10 includes a power plant 15 comprising means for generating the requisite power (e.g. including electrical, hydraulic, motive and/or pneumatic power as applicable) for the apparatus 10. The power plant 15 may take any convenient conventional form, e.g. comprising any one or more of an engine, compressor and/or batteries.

In typical embodiments, the apparatus 10 is mobile and comprises one or more wheels and/or tracks 11 mounted on the chassis 13. However, in other embodiments (not illustrated), the apparatus 10 may be semi-mobile, for example comprising fixed or adjustable legs (and usually no wheels or tracks). The apparatus 10 may be self-propelled and to this end the power plant 15 may comprise an internal combustion engine and associated drive system (not shown). In such cases, the internal combustion engine conveniently generates power for the hydraulic system(s), e.g. by operating the hydraulic pump(s) (not shown), and may also power an electric generator (not shown) for the electrical system.

In preferred embodiments, the material processing unit 12 comprises a conveyor 16 (typically a belt conveyor) having a feed end 18 and a discharge end 20. The feed unit 14 is arranged to feed material to be processed to the material processing unit 12, and in particular onto the feed end 18 of the conveyor 16. Depending on the type of processing performed by the unit 12, at least some of the material 22 is discharged from the unit 12 via the discharge end 20 of the conveyor. In some embodiments, the conveyor 16 is operable at any one of a plurality of speeds.

In the illustrated embodiment in which the material processing unit 12 is an eddy current separator, a magnetic rotor (not shown) is located at the discharge end of the conveyor 16 and allows the processing unit 12 to separate non-ferrous metal objects from other non-ferrous objects in conventional manner. In particular, the non-ferrous metal objects are projected further from the discharge end 20 than the other non-ferrous objects thereby allowing separation of the two types of material as is described in more detail hereinafter. More generally, the distance by which an object is propelled from the discharge end 20 may depend on one or more parameters, including any one or more of: the speed of the conveyor 16; the size of the object; the material(s) from which the object is made.

In preferred embodiment, the material processing unit 12 is arranged to discharge material in a forward direction (left to right as viewed in Figure 1). To this end, the material processing unit 12 may be oriented such that the longitudinal axis of the conveyor 16 is substantially aligned with the longitudinal axis of the chassis 13, and that material 22 discharged from the discharge end 20 is projected in the forward direction.

The apparatus 10 includes a material handling unit 24 for receiving processed material from the material processing unit 12. In preferred embodiments, the material handling unit 24 is configured to receive the processed material 22 from the discharge end 20 of the conveyor 16. More generally, the material handling unit 24 receives material from the outlet of the processing unit 12. To this end, in preferred embodiments the material handling unit 24 is located forwardly of the material processing unit 12. The material handling unit is movable with respect to the chassis 13 and with respect to the material processing unit 12 in a longitudinal direction (as indicated by arrow A) that is parallel with, or along, the longitudinal axis of the chassis 13. The material handling unit 24 may be provided on a carriage 26, the carriage being coupled to the chassis 13 for movement in the longitudinal direction. The movement of material handling unit 24 is preferably linear and bi-directional, i.e. such that it can be moved towards and away from the material processing unit 12 in the longitudinal direction. Any conventional coupling means may be used for movably coupling the material handling unit 24, and in particular the carriage 26, to the chassis 13, for example one or more conventional linear movement mechanism such as a linear slide mechanism and/or a linear roller mechanism.

In preferred embodiments, the material handling unit 24 comprises at least one conveyor 28. In the illustrated embodiment, the material handling unit 24 has first and second conveyors 28A, 28B. Each conveyor 28A, 28B is typically a belt-type conveyor but may alternatively be of any other suitable conventional type. Each conveyor 28A, 28B has a discharge end 30 and a feed section 32, which is typically at the end opposite the discharge end 30. A feedboot (not shown) may be provided at the feed section 32. In use, the feed section 32 of each conveyor 28A, 28B is positioned to receive material from the material processing unit 12, and the conveyor 28A, 28B conveys the material to the discharge end 30 from where it is discharged from the apparatus 10, for example to a stockpile, a receptacle or to another material processing apparatus.

In preferred embodiments, each conveyor 28A, 28B is carried by the carriage 26 and is movable with the carriage 26 in the longitudinal direction. Typically, the feed section 32 is mounted on the carriage 26 by any convenient coupling or fixing device(s). Alternatively, in embodiments where there is no carriage, each conveyor 28A, 28B may be movably coupled to the chassis 13 by any conventional coupling mechanism that allows movement in the longitudinal direction. In any event, the entire conveyor 28A, 28B is advantageously movable with respect to the material processing unit 12 in the longitudinal direction.

In a deployed state, each conveyor 28A, 28B projects from the apparatus 10 in a direction that is perpendicular or oblique to the longitudinal axis. In the illustrated embodiment, the first conveyor 28A is located and oriented to project, when deployed, from a first side of the apparatus 10 with respect to the longitudinal axis, and the second conveyor 28B is located and oriented to project from the opposite side the apparatus 10 when deployed.

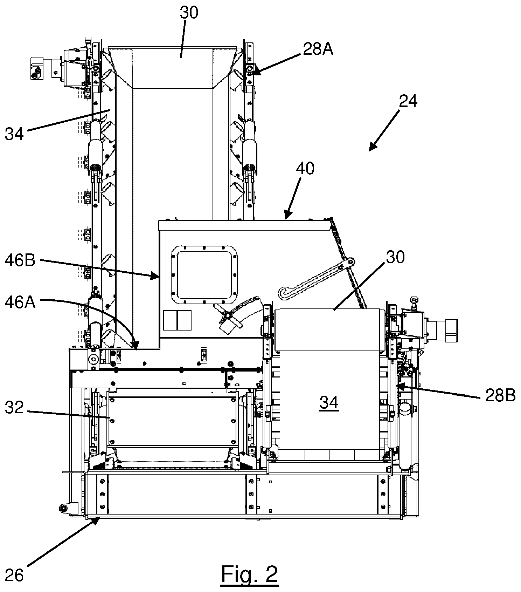

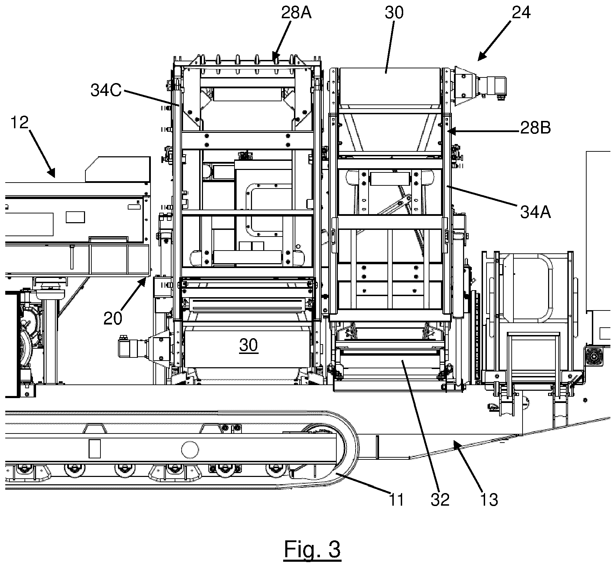

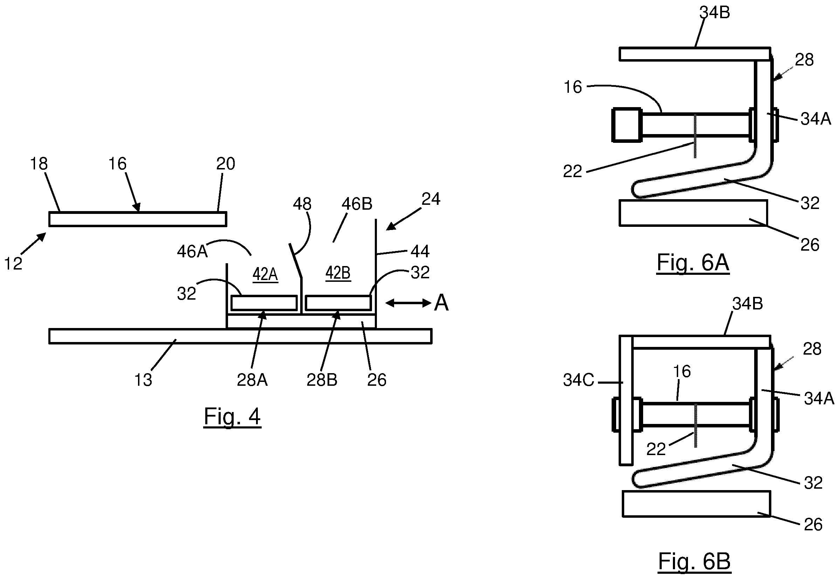

In preferred embodiments, each conveyor 28A, 28B is foldable from its deployed state (for example as shown in Figures 1, 2, 5B, 5D and 5F) to a transport state (for example as shown in Figures 3, 6A, 6B and 5H). To this end, each conveyor 28A, 28B has one or more foldable section 34 that is foldable with respect to the feed section 32, usually by means of one or more hinge or other pivotable coupling (not shown). In the embodiment of Figures 1 to 3, an as illustrated schematically in Figure 6B, each conveyor 28 has a plurality of foldable sections 34A, 34B, 34C that allow the conveyor 28 to be folded up one side of the apparatus 10, over the top of the apparatus 10 and down the opposite side of the apparatus 10. Figure 6A schematically illustrates a material handling unit 24 in which the, or each, each conveyor 28 has a plurality of foldable sections 34A, 34B that allow the conveyor 28 to be folded up one side of the apparatus 10 and over the top of the apparatus 10. Figured 5A to G schematically illustrates a material handling unit 24 in which the, or each, each conveyor 28 has one foldable section 34A that allows the conveyor 28 to be folded up one side of the apparatus 10. In embodiments where there is more than one foldable section 34, the foldable sections 34 are usually pivotably coupled to each other end-to-end. One or more actuators (not shown), e.g. hydraulic rams, may be provided for folding and unfolding the conveyor 28A, 28B.

In the transport state, in order to minimise the width of the apparatus 10 for transport, it is desirable that each folded conveyor 28A, 28B does not increase the overall width of the apparatus 10. In some embodiments, the material processing unit 12 may be the widest component of the apparatus 10 and so it is desirable that the folded conveyor 28 does not project laterally outwards from the apparatus 10 further than the material processing unit 12. To these ends, in the transport state it is desirable that the first foldable section 34A extends vertically, or substantially vertically, upwards from the feed section 32 or other base, or that it extends inwardly towards the longitudinal axis of the apparatus 10. In embodiments in which one or more additional foldable sections 34B, 34C are provided at the otherwise free end of section 34A, these additional section(s) may also extend vertically upwards or, preferably, may be folded inwardly towards, or over the top of, or down the other side of, the apparatus 10 in the transport mode.

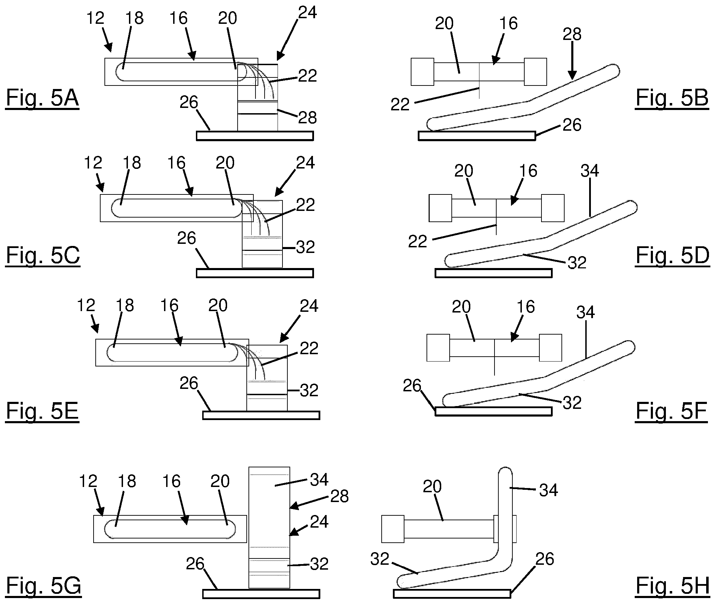

When the apparatus 10 is processing material, the material handling unit 24 is positioned to collect material output from the material processing unit 12. In preferred embodiments, the handling unit 24 is positioned such that the processed material from the outlet of the unit 12 is received by the feed section 32 of each conveyor 28A, 28B. In particular, the material handling unit 24 is positioned with respect to the material processing unit 12 so that material 22 discharged from the discharge end 20 of conveyor 16 is received by the feed section of relevant conveyor 28A, 28B. The positioning may be such that the material handling unit 24 at least partly overlaps with the material processing unit 12 in the longitudinal direction A. In particular, the material handling unit 24 may be positioned such that at least part of at least one conveyor 28A overlaps with the material processing unit 12 in the longitudinal direction (for example as shown in Figures 1, 5A and 5C). In this position, the ability of the overlapping conveyor 28A to fold is restricted by the material processing unit 12. In particular, because of the overlap, the material processing unit 12 obstructs the foldable section 34 such that it cannot fold inwardly past the material processing unit 12. As a result, the conveyor 28A, even when in the transport state, increases the overall with of the apparatus 10, which can be problematic especially if the width of the material processing unit 12 itself is already at or close to a maximum transport width. The problem is exacerbated in cases where the width of the material processing unit 12 prevents the foldable section 34 of the overlapping conveyor 28A from reaching a vertical orientation.

Accordingly, in preferred embodiments, the material handling unit 24 is movable in the longitudinal direction into and out of a first state, which is particularly suited for transport of the apparatus 10, in which the conveyor 28A does not overlap with the material processing unit 12 in the longitudinal direction. The first state is illustrated in Figure 3 from which it can be seen that the material handling unit 24 is located further forward in the longitudinal direction than it is in Figure 1 such that the conveyor 28A no longer overlaps with the material processing unit 12 in the longitudinal direction. This allows the conveyor 28A to fold without being obstructed by the material processing unit 12. Each conveyor 28A, 28B is advantageously configured to fold such that, in its transport state, it has a width (in a lateral direction perpendicular to the longitudinal axis) that does not exceed the width of the material processing unit 12, and as a result, the folded conveyors 28A, 28B do not increase the overall width of the apparatus in the transport state, as is illustrated in Figures 5H, 6A and 6B. It is noted that, in Figure 3 the conveyor 28A is folded around the apparatus 10 so that the end 30 that can be seen on the far side of the apparatus 10 in Figure 1 is on the near side of the apparatus 10.

It is noted that the first state of the material handling unit 24 does not necessarily correspond to a single longitudinal location of the material handling unit 24. Instead, the material handling unit 24 may be movable to adopt any one of a plurality of longitudinal locations in its first state, wherein in each location the conveyor(s) 28 do not overlap with the material processing unit 12 in the longitudinal direction.

In preferred embodiments, the material handling unit 24 is movable in the longitudinal direction into and out of a second state in which the conveyor 28A at least partly overlaps with the material processing unit 12 in the longitudinal direction, as is illustrated by way of example in Figures 1, 5A and 5C. In preferred embodiments, the conveyor 28A at least partly overlaps with the conveyor 16 in the longitudinal direction. It is noted that the second state of the material handling unit 24 does not necessarily correspond to a single longitudinal location of the material handling unit 24. Instead, the material handling unit 24 may be movable to adopt any one of a plurality of longitudinal locations in its second state, wherein in each location at least one conveyor 28A overlaps with the material processing unit 12 in the longitudinal direction. The second state may be adopted when the apparatus 10 is processing material. However, the apparatus 10 may also process material when the material handling unit 24 is in the first state depending on the actual longitudinal location of the handling unit 24 and in some cases on other parameters such as the speed of the conveyor 16; the size of the objects being processed; and the material(s) from which the objects are made.

More generally, the material handling unit 24 is movable longitudinally with respect to the outlet of the material processing unit 12. This allows the longitudinal position of the inlet(s) of the material handling unit 24 to be varied with respect to the outlet of the material processing unit 12. In preferred embodiments, the longitudinal position of the conveyors 28A, 28B, and in particular the feed section 32, is adjustable with respect to the discharge end 20 of the conveyor 16. It is noted that, when the apparatus 10 is processing material, the material handling unit 24 may adopt a longitudinal location that corresponds to the second state, or a longitudinal location that corresponds to the first state.

The longitudinal adjustability of the material handling unit 24 is advantageous during material processing as it allows the apparatus 10 to be adjusted to suit different operating characteristics of the material processing unit 12, for example different operating speeds of the conveyor 16, different sizes of material being processed, and/or different types of material being processed. This is described in more detail with reference in particular to Figures 5A to 5H.

In Figures 5A to 5H, the material handling unit 24 is assumed, by way of simple example, to comprise a single conveyor 28, and the material processing unit 12 is represented by the conveyor 16. In Figures 5A to 5F, the conveyor 28 is in its deployed state and the material processing unit 12 is depositing material 22 onto feed section 32. Figures 5A, 5C, 5E and 5G show the material handling unit 24 in schematic side view, while Figures 5B, 5D, 5F and 5H show respective corresponding end views. In the configuration of Figures 5A and 5B, the material handling unit 24 is in a longitudinal location in which the conveyor 28 overlaps longitudinally with the discharge end 20 of the conveyor 16 by a relatively large amount. In the configuration of Figures 5C and 5D, the material handling unit 24 is in a different longitudinal location in which the conveyor 28 overlaps longitudinally with the discharge end 20 of the conveyor 16 by a smaller amount. In the configuration of Figures 5E and 5F, the material handling unit 24 is in another different longitudinal location in which the conveyor 28 overlaps longitudinally with the discharge end 20 of the conveyor 16 by an even smaller amount. The configuration of Figures 5A and 5B may be preferable when the material processing unit 12 is processing material at relatively low conveyor speeds, and/or when the material comprises objects that are relatively large and/or formed from a material such that they are projected relatively small distances from the discharge end 20, while the configurations of Figures 5C and 5D, and 5E and 5F, may be preferable when processing at progressively higher speeds, and/or when the objects are smaller and/or tend to be projected further from the conveyor 16. Figures 5A to 5F correspond to the second state of the material handling unit 24. In Figures 5G and 5H, the material handling unit 24 is in its first state and the conveyor 28 is in its transport state.

Although not shown in the simple embodiment of Figures 5A to 5H, the material handling unit 24 may comprise a separation unit 40, or splitter. The embodiment of Figures 1 to 3 includes the separation unit 40, but its configuration can best be seen from Figure 4. The separation unit 40 is configured to collect material received from the material processing unit 12 in two or more channels 42A, 42B, each channel 42A, 42B being configured to deliver its collected material to a respective destination associated with each channel 42A, 42B. In preferred embodiments, the respective feed section 32 of conveyors 28A, 28B is the respective destination for the channels 42A, 42B. In alternative embodiments, the respective destination may be a collection bin or another material processing unit. The separation unit 40 may comprise a body structure 44 shaped and configured to define the channels 42A, 42B, each channel 42A, 42B having a respective inlet 46A, 46B for receiving material from the material processing unit 12. The inlets 46A, 46B are preferably spaced apart in the longitudinal direction in order to catch material discharged from the unit 12 depending on how far it is projected from the unit 12. This allows the processed material to be separated depending on how far it is projected by the material processing unit 12. For example, in the case of an eddy current separator, non-ferrous metal objects tend to be thrown further that other non-ferrous objects, and so the non-ferrous metal objects may be collected in the further channel 42B, while the other non-ferrous objects may be collected in the nearer channel 42A. Typically, the separation unit 40 includes a divider 48 between adjacent channels 42A, 42B. Optionally, the divider 48 is adjustable to adjust the size and/or position of the respective channel inlets 46A, 46B. This provides a degree of control over how the separation unit 40 separates the material ejected from the material processing unit 12. Further control can be exercised by moving the handling unit 24 in the longitudinal direction as described above. By way of example the divider 48 may comprise a movable (e.g. pivotable) wall.

In preferred embodiments, the separation unit 40 and conveyors 28A, 28B each form part of the material handling unit 24, and move together as the material handling unit 24 moves. In alternative embodiments, the separation unit 40 may be longitudinally movable with respect to the conveyors 28A, 28B. Alternatively still, the conveyors 28A, 28B may be longitudinally fixed (i.e. not part of the movable material handling unit 24), the handling unit 24 comprising the separation unit 40.

The invention is not limited to the embodiment(s) described herein but can be amended or modified without departing from the scope of the present invention which is delimited by the appended claims.

## Claims

1. A material processing apparatus (10) comprising:
a chassis (13) having a longitudinal axis;
a material processing unit (12) carried by the chassis (13), said material processing unit (12) having an outlet; and
a material handling unit (24) for receiving processed material from said material processing unit (12), wherein said material handling unit (24) comprises at least one conveyor (28) and a separation unit (40) for receiving material from said outlet, the separation unit (40) being configured to separate material received from said material processing unit (12) and to direct separated material onto said at least one conveyor (28), and wherein said material handling unit (24) is movable with respect to said material processing unit (12) in a longitudinal direction to adjust a relative longitudinal position between the separation unit (40) and said outlet.

2. The apparatus (10) of claim 1, wherein in a deployed state said at least one conveyor (28) projects from said apparatus (10) in a direction that is perpendicular or oblique to said longitudinal axis, and wherein, preferably, said at least one conveyor (28) is foldable from said deployed state to a transport state, and wherein, preferably, in said transport state said at least one conveyor does not project beyond said material processing unit (12) in a lateral direction perpendicular to said longitudinal axis.

3. The apparatus (10) of claim 1 or 2, wherein said at least one conveyor (28) comprises a first conveyor (28A) and a second conveyor (28B), and wherein, optionally, said first conveyor (28A) is arranged for projection from a first side of the apparatus (10) with respect to said longitudinal axis, and said second conveyor (28B) is arranged for projection from a second side of the apparatus opposite said first side with respect to said longitudinal axis.

4. The apparatus (10) of any preceding claim, wherein said material handling unit (24) is movable in said longitudinal direction into and out of a first state in which said at least one conveyor (28) does not overlap with said material processing unit (12) in said longitudinal direction.

5. The apparatus (10) of claim 4, wherein said at least one conveyor (28) comprises more than one conveyor (28A, 28B), and wherein when said material handling unit (24) is in said first state none of the conveyors overlap with said material processing unit (12) in said longitudinal direction.

6. The apparatus (10) of any preceding claim, wherein said material handling unit (24) is movable in said longitudinal direction into and out of a second state in which at least one of said at least one conveyor (28) at least partly overlaps with said material processing unit (12) in said longitudinal direction.

7. The apparatus (10) of any preceding claim, wherein said material processing unit (12) has a discharge end (30), said material handling unit (24) being movable with respect to said material processing unit to adjust a relative longitudinal position between said at least one conveyor (28) and said discharge end, and wherein, preferably, in said second state, at least one of said at least one conveyor at least partly overlaps with said discharge end in said longitudinal direction.

8. The apparatus (10) of any preceding claim, wherein the material handling unit (24) is movable longitudinally with respect to the outlet of the material processing unit (12) to allow a relative longitudinal position between said outlet and at least one inlet of the material handling unit to be varied, and wherein, optionally, said at least one conveyor (28) is movable to adjust a relative longitudinal position between said outlet and said at least one conveyor, in particular a feed section (32) of said at least one conveyor, and wherein, optionally, said outlet comprises a discharge end of a conveyor.

9. The apparatus (10) of claim 7 or 8 wherein, in a material processing mode, said material handling unit (24) is positioned with respect to said material processing unit (12) such that material discharged in use from said discharge end is deposited directly or indirectly onto said at least one conveyor (28).

10. The apparatus (10) of any preceding claim, wherein said separation unit (40) comprises at least one inlet for receiving material from said material processing unit (12), wherein said material handling unit (24) is movable with respect to said material processing unit to adjust a relative longitudinal position between said at least one inlet and said outlet.

11. The apparatus (10) of claim 10, wherein said separation unit (40) comprises a body structure (44) configured to define at least two channels (42A, 42B), each channel having a respective inlet for receiving material from the material processing unit (12), the inlets preferably being spaced apart in the longitudinal direction.

12. The apparatus (10) of any preceding claim, wherein said material processing unit (12) includes a conveyor (16) arranged to convey material in said longitudinal direction, said conveyor having a discharge end, said material handling unit (24) being positioned, in a material processing mode, to receive material from said discharge end of the conveyor.

13. The apparatus (10) of claim 12, wherein the material processing unit conveyor (16) is operable at any one of multiple speeds.

14. The apparatus (10) of any preceding claim, wherein said material processing unit (12) comprises an eddy current separator.

## Patentansprüche

1. Materialbearbeitungsvorrichtung (10), umfassend:
einen Unterbau (13), der eine Längsachse aufweist;
eine von dem Unterbau (13) getragene Materialbearbeitungseinheit (12), wobei die Materialbearbeitungseinheit (12) einen Auslass aufweist; und
eine Materialhandhabungseinheit (24) zum Aufnehmen von bearbeitetem Material von der Materialbearbeitungseinheit (12), wobei die Materialhandhabungseinheit (24) mindestens einen Förderer (28) und eine Abscheideeinheit (40) zum Aufnehmen von Material von dem Auslass umfasst, wobei die Abscheideeinheit (40) konfiguriert ist, von der Materialbearbeitungseinheit (12) aufgenommenes Material abzuscheiden und abgeschiedenes Material auf den mindestens einen Förderer (28) zu leiten, und wobei die Materialhandhabungseinheit (24) in Bezug auf die Materialbearbeitungseinheit (12) in einer Längsrichtung beweglich ist, um eine relative Längsposition zwischen der Abscheideeinheit (40) und dem Auslass einzustellen.

2. Vorrichtung (10) nach Anspruch 1, wobei der mindestens eine Förderer (28) in einem entfalteten Zustand in einer Richtung, die senkrecht oder schräg zu der Längsachse ist, von der Vorrichtung (10) hervorragt und wobei vorzugsweise der mindestens eine Förderer (28) aus dem entfalteten Zustand in einen Transportzustand faltbar ist und wobei vorzugsweise der mindestens eine Förderer in dem Transportzustand die Materialbearbeitungseinheit (12) in einer seitlichen Richtung senkrecht zu der Längsachse nicht überragt.

3. Vorrichtung (10) nach Anspruch 1 oder 2, wobei der mindestens eine Förderer (28) einen ersten Förderer (28A) und einen zweiten Förderer (28B) umfasst und wobei optional der erste Förderer (28A) so angeordnet ist, dass er von einer ersten Seite der Vorrichtung (10) in Bezug auf die Längsachse hervorragt, und der zweite Förderer (28B) so angeordnet ist, dass er von einer zweiten Seite der Vorrichtung gegenüber der ersten Seite in Bezug auf die Längsachse hervorragt.

4. Vorrichtung (10) nach einem der vorhergehenden Ansprüche, wobei die Materialhandhabungseinheit (24) in der Längsrichtung in einen ersten Zustand, in dem der mindestens eine Förderer (28) die Materialbearbeitungseinheit (12) in der Längsrichtung nicht überlappt, und aus diesem beweglich ist.

5. Vorrichtung (10) nach Anspruch 4, wobei der mindestens eine Förderer (28) mehr als einen Förderer (28A, 28B) umfasst und wobei, wenn sich die Materialhandhabungseinheit (24) in dem ersten Zustand befindet, keiner der Förderer die Materialbearbeitungseinheit (12) in der Längsrichtung überlappt.

6. Vorrichtung (10) nach einem der vorhergehenden Ansprüche, wobei die Materialhandhabungseinheit (24) in der Längsrichtung in einen zweiten Zustand, in dem der mindestens eine des mindestens einen Förderers (28) die Materialbearbeitungseinheit (12) in der Längsrichtung zumindest teilweise überlappt, und aus diesem beweglich ist.

7. Vorrichtung (10) nach einem der vorhergehenden Ansprüche, wobei die Materialbearbeitungseinheit (12) ein Abführende (30) aufweist, wobei die Materialhandhabungseinheit (24) in Bezug auf die Materialbearbeitungseinheit beweglich ist, um eine relative Längsposition zwischen dem mindestens einen Förderer (28) und dem Abführende einzustellen, und wobei vorzugsweise in dem zweiten Zustand mindestens einer des mindestens einen Förderers das Abführende in der Längsrichtung zumindest teilweise überlappt.

8. Vorrichtung (10) nach einem der vorhergehenden Ansprüche, wobei die Materialhandhabungseinheit (24) in Bezug auf den Auslass der Materialbearbeitungseinheit (12) längs beweglich ist, um zu ermöglichen, dass eine relative Längsposition zwischen dem Auslass und mindestens einem Einlass der Materialhandhabungseinheit variiert wird, und wobei optional der mindestens eine Förderer (28) beweglich ist, um eine relative Längsposition zwischen dem Auslass und dem mindestens einen Förderer, insbesondere einem Zuführabschnitt (32) des mindestens einen Förderers, einzustellen, und wobei optional der Auslass ein Abführende eines Förderers umfasst.

9. Vorrichtung (10) nach Anspruch 7 oder 8, wobei die Materialhandhabungseinheit (24) in einem Materialbearbeitungsmodus in Bezug auf die Materialbearbeitungseinheit (12) derart positioniert ist, dass Material, das im Gebrauch von dem Abführende abgeführt wird, direkt oder indirekt auf dem mindestens einen Förderer (28) abgelegt wird.

10. Vorrichtung (10) nach einem der vorhergehenden Ansprüche, wobei die Abscheideeinheit (40) mindestens einen Einlass zum Aufnehmen von Material von der Materialbearbeitungseinheit (12) umfasst, wobei die Materialhandhabungseinheit (24) in Bezug auf die Materialbearbeitungseinheit beweglich ist, um eine relative Längsposition zwischen dem mindestens einen Einlass und dem Auslass einzustellen.

11. Vorrichtung (10) nach Anspruch 10, wobei die Abscheideeinheit (40) eine Körperstruktur (44) umfasst, die dazu konfiguriert ist, mindestens zwei Kanäle (42A, 42B) zu definieren, wobei jeder Kanal einen jeweiligen Einlass zum Aufnehmen von Material von der Materialbearbeitungseinheit (12) aufweist, wobei die Einlässe vorzugsweise in der Längsrichtung beabstandet sind.

12. Vorrichtung (10) nach einem der vorhergehenden Ansprüche, wobei die Materialbearbeitungseinheit (12) einen Förderer (16) beinhaltet, der dazu angeordnet ist, Material in der Längsrichtung zu fördern, wobei der Förderer ein Abführende aufweist, wobei die Materialhandhabungseinheit (24) in einem Materialbearbeitungsmodus dazu positioniert ist, Material von dem Abführende des Förderers aufzunehmen.

13. Vorrichtung (10) nach Anspruch 12, wobei der Förderer (16) der Materialbearbeitungseinheit mit einer beliebigen von mehreren Geschwindigkeiten betreibbar ist.

14. Vorrichtung (10) nach einem der vorhergehenden Ansprüche, wobei die Materialbearbeitungseinheit (12) einen Wirbelstromabscheider umfasst.

## Revendications

1. Appareil de traitement de matériaux (10) comprenant :
un châssis (13) ayant un axe longitudinal ;
une unité de traitement de matériaux (12) portée par le châssis (13), ladite unité de traitement de matériaux (12) ayant une sortie ; et
une unité de manipulation de matériaux (24) pour recevoir un matériau traité à partir de ladite unité de traitement de matériaux (12), dans lequel l'unité de manipulation de matériaux (24) comprend au moins un transporteur (28) et une unité de séparation (40) pour recevoir un matériau à partir de ladite sortie, l'unité de séparation (40) étant configurée pour séparer le matériau reçu à partir de ladite unité de traitement de matériaux (12) et pour diriger le matériau séparé sur ledit au moins un transporteur (28), et dans lequel ladite unité de manipulation de matériaux (24) est mobile par rapport à ladite unité de traitement de matériaux (12) dans une direction longitudinale pour régler une position longitudinale relative entre l'unité de séparation (40) et ladite sortie.

2. Appareil (10) selon la revendication 1, dans lequel dans un état déployé ledit au moins un transporteur (28) fait saillie à partir dudit appareil (10) dans une direction perpendiculaire ou oblique audit axe longitudinal, et dans lequel, de préférence, ledit au moins un transporteur (28) est pliable dudit état déployé à un état de transport, et dans lequel, de préférence, dans ledit état de transport ledit au moins un transporteur ne fait pas saillie au-delà de ladite unité de traitement de matériaux (12) dans une direction latérale perpendiculaire audit axe longitudinal.

3. Appareil (10) selon la revendication 1 ou 2, dans lequel ledit au moins un transporteur (28) comprend un premier transporteur (28A) et un second transporteur (28B), et dans lequel, éventuellement, ledit premier transporteur (28A) est agencé pour faire saillie à partir d'un premier côté de l'appareil (10) par rapport audit axe longitudinal, et ledit second transporteur (28B) est agencé pour faire saillie à partir d'un second côté de l'appareil opposé audit premier côté par rapport audit axe longitudinal.

4. Appareil (10) selon une quelconque revendication précédente, dans lequel ladite unité de manipulation de matériaux (24) est mobile dans ladite direction longitudinale dans et hors d'un premier état dans lequel ledit au moins un transporteur (28) ne chevauche pas ladite unité de traitement de matériaux (12) dans ladite direction longitudinale.

5. Appareil (10) selon la revendication 4, dans lequel ledit au moins un transporteur (28) comprend plus d'un transporteur (28A, 28B), et dans lequel lorsque ladite unité de manipulation de matériaux (24) est dans ledit premier état, aucun des transporteurs ne chevauche ladite unité de traitement de matériaux (12) dans ladite direction longitudinale.

6. Appareil (10) selon une quelconque revendication précédente, dans lequel ladite unité de manipulation de matériaux (24) est mobile dans ladite direction longitudinale dans et hors d'un second état dans lequel au moins l'un parmi ledit au moins un transporteur (28) chevauche au moins partiellement ladite unité de traitement de matériaux (12) dans ladite direction longitudinale.

7. Appareil (10) selon une quelconque revendication précédente, dans lequel ladite unité de traitement de matériaux (12) a une extrémité d'évacuation (30), ladite unité de manipulation de matériaux (24) étant mobile par rapport à ladite unité de traitement de matériaux pour régler une position longitudinale relative entre ledit au moins un transporteur (28) et ladite extrémité d'évacuation, et dans lequel, de préférence, dans ledit second état, au moins l'un parmi ledit au moins un transporteur chevauche au moins partiellement ladite extrémité d'évacuation dans ladite direction longitudinale.

8. Appareil (10) selon une quelconque revendication précédente, dans lequel l'unité de manipulation de matériaux (24) est mobile longitudinalement par rapport à la sortie de l'unité de traitement de matériaux (12) pour permettre de faire varier une position longitudinale relative entre ladite sortie et au moins une entrée de l'unité de manipulation de matériaux, et dans lequel, éventuellement, ledit au moins un transporteur (28) est mobile pour régler une position longitudinale relative entre ladite sortie et ledit au moins un transporteur, en particulier une section d'alimentation (32) dudit au moins un transporteur, et dans lequel, éventuellement, ladite sortie comprend une extrémité d'évacuation d'un transporteur.

9. Appareil (10) selon la revendication 7 ou 8, dans lequel, dans un mode de traitement de matériaux, ladite unité de manipulation de matériaux (24) est positionnée par rapport à ladite unité de traitement de matériaux (12) de sorte que le matériau évacué lors de l'utilisation à partir de ladite extrémité d'évacuation est déposé directement ou indirectement sur ledit au moins un transporteur (28).

10. Appareil (10) selon une quelconque revendication précédente, dans lequel ladite unité de séparation (40) comprend au moins une entrée pour recevoir un matériau à partir de ladite unité de traitement de matériaux (12), dans lequel ladite unité de manipulation de matériaux (24) est mobile par rapport à ladite unité de traitement de matériaux pour régler une position longitudinale relative entre ladite au moins une entrée et ladite sortie.

11. Appareil (10) selon la revendication 10, dans lequel ladite unité de séparation (40) comprend une structure de corps (44) configurée pour définir au moins deux canaux (42A, 42B), chaque canal ayant une entrée respective pour recevoir un matériau à partir de l'unité de traitement de matériaux (12), les entrées étant de préférence espacées dans la direction longitudinale.

12. Appareil (10) selon une quelconque revendication précédente, dans lequel ladite unité de traitement de matériaux (12) comprend un transporteur (16) agencé pour transporter un matériau dans ladite direction longitudinale, ledit transporteur ayant une extrémité d'évacuation, ladite unité de manipulation de matériaux (24) étant positionnée, dans un mode de traitement de matériaux, pour recevoir un matériau à partir de ladite extrémité d'évacuation du transporteur.

13. Appareil (10) selon la revendication 12, dans lequel le transporteur (16) de l'unité de traitement de matériaux est actionné à l'une quelconque des multiples vitesses.

14. Appareil (10) selon une quelconque revendication précédente, dans lequel ladite unité de traitement de matériaux (12) comprend un séparateur à courants de Foucault.
